(19) Europäisches Patentamt
European Patent Office
Office européen des brevets

(11) Veröffentlichungsnummer: **0 356 842 B1**

(12) # EUROPÄISCHE PATENTSCHRIFT

(45) Veröffentlichungstag der Patentschrift: **16.03.94**

(51) Int. Cl.[5]: **C08F 10/06**, C08F 4/646

(21) Anmeldenummer: **89115312.4**

(22) Anmeldetag: **19.08.89**

(54) **Verfahren zum Herstellen von Homo- und Copolymerisaten des Propens mittels eines Ziegler-Natta-Katalysatorsystems.**

(30) Priorität: **31.08.88 DE 3829519**

(43) Veröffentlichungstag der Anmeldung:
**07.03.90 Patentblatt 90/10**

(45) Bekanntmachung des Hinweises auf die Patenterteilung:
**16.03.94 Patentblatt 94/11**

(84) Benannte Vertragsstaaten:
**AT BE DE ES FR GB IT NL**

(56) Entgegenhaltungen:
**EP-A- 0 014 523**
**EP-A- 0 171 200**
**EP-A- 0 288 845**
**EP-A- 0 306 867**

(73) Patentinhaber: **BASF Aktiengesellschaft**
**Carl-Bosch-Strasse 38**
**D-67063 Ludwigshafen(DE)**

(72) Erfinder: **Zolk, Ralf, Dr.**
**Weinbietstrasse 7**
**D-6714 Weisenheim(DE)**
Erfinder: **Kerth, Juergen, Dr.**
**Wattenheimer Strasse 15**
**D-6719 Carlsberg(DE)**
Erfinder: **Hemmerich, Rainer, Dr.**
**Veilchenweg 9**
**D-6718 Gruenstadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 356 842 B1

## Beschreibung

Die vorliegende Erfindung betrifft ein Verfahren zum Herstellen von Homopolymerisaten des Propens sowie Copolymerisaten des Propens mit untergeordneten Mengen anderer $C_2$- bis $C_{12}$-, insbesondere $C_2$- bis $C_6$-$\alpha$-Monoolefine durch Polymerisation, insbesondere durch Trockenphasenpolymerisation, des bzw. der Monomeren bei Temperaturen von 20 bis 160, insbesondere 50 bis 120 °C und Drücken von 1 bis 100, insbesondere 10 bis 70 bar, mittels eines Ziegler-Natta-Katalysatorsystems aus

(1) einer Titankomponente, die auf einem feinteiligen, formgebenden Kieselgel basiert und Titan, Magnesium, Chlor sowie ein Benzolcarbonsäurederivat enthält,

(2) einer Aluminiumkomponente der Formel

$$Al\ R_3,$$

worin steht

R für einen nicht mehr als 8, insbesondere nicht mehr als 4 Kohlenstoffatome aufweisenden Alkylrest,

sowie

(3) einer Silankomponente der Formel

$$R^1_n\ Si(OR^2)_{4-n},$$

worin stehen

$R^1$ für einen nicht mehr als 16, vorzugsweise nicht mehr als 10 Kohlenstoffatome aufweisenden Kohlenwasserstoffrest gesättigt-aliphatischer und/oder aromatischer Natur,

$R^2$ für einen nicht mehr als 15, vorzugsweise nicht mehr als 8, und insbesondere nicht mehr als 4 Kohlenstoffatome aufweisenden Alkylrest, und

n für eine Zahl von 0 bis 3, vorzugsweise von 0 bis 2, und insbesondere die Zahl 1 oder 2,

mit den Maßgaben, daß das Atomverhältnis Titan aus der Titankomponente (1) : Aluminium aus der Aluminiumkomponente (2) 1 : 10 bis 1 : 800, insbesondere 1 : 20 bis 1 : 200, und das Molverhältnis Aluminiumkomponente (2) : Silankomponente (3) 1 : 0,01 bis 1 : 0,8, insbesondere 1 : 0,02 bis 1 : 0,5 beträgt.

Polymerisationsverfahren dieser Art sind bekannt; ihre Besonderheit gegenüber vergleichbaren anderen Verfahren liegt in der speziellen Ausgestaltung des Katalysatorsystems, wobei als Prototypen für den vorliegenden Fall die aus den EP-OSen 0 014 523, 0 045 977, 0 171 200 und 0 195 497 sowie den GB-Psen 2 101 609 und 2 101 611 bekannten Verfahren genannt werden können.

Die speziellen Ausgestaltungen der Katalysatorsysteme werden vorgenommen, um bestimmte Ziele zu erreichen, wie die folgenden:

Das Katalysatorsystem soll leicht herstellbar sein und eine hohe Ausbeute an Polymerisat liefern, welches einen möglichst großen isotaktischen Anteil zu enthalten hat. Das Katalysatorsystem soll darüber hinaus Polymerisate mit speziellen morphologischen Eigenschaften erzeugen, etwa im Sinne einer einheitlichen Korngröße und/oder einer Verringerung der Feinstkornanteile und/oder eines hohen Schüttgewichts. Neben diesen für die Beherrschung der Polymerisationssysteme, die Aufarbeitung der Polymerisate und/oder ihre Verarbeitung wichtigen Parametern ist auch ein niedriger Halogengehalt des Polymerisats - besonders im Hinblick auf Korrosionsprobleme - von Bedeutung, was durch Steigerung der Polymerausbeute und/oder ein Katalysatorsystem zu erreichen ist, welches möglichst wenig Halogen enthält.

Manche dieser Ziele sind nach dem Stand der Technik nur mit sehr aufwendigen Verfahren zu erreichen, oder dann, wenn man andere Ziele zurücksetzt:

So wird z.B. in der EP-OS 0 045 977 ein Katalysatorsystem, bestehend aus "aktivem" $MgCl_2$, $TiCl_4$ und einem Phthalsäurederivat, beschrieben. Mit Kieselgel als formgebendem Trägermaterial ist die Produktivität des Katalysatorsystems jedoch nicht mehr befriedigend; auch ist der Chlorgehalt der Polymerisate vergleichsweise hoch.

In den EP-OSen 0 014 523 und 0 171 200 sowie den GB-PSen 2 101 609 und 2 101 611 werden Katalysatorsysteme beschrieben, deren Titankomponente durch Behandeln eines festen, anorganischen Oxids mit einer organischen Magnesiumverbindung, einer Lewis-Base und Titantetrachlorid erhalten wird, wobei zusätzlich ein Halogenierungsmittel, das kein Titantetrachlorid ist und/oder eine organische Verbindung der Metalle Bor, Aluminium, Silicium oder Zinn oder ein Bortrihalogenid oder ein Halogenatome enthaltender Alkohol eingesetzt werden muß. Trotz aufwendiger und langwieriger Herstellungsweise ist die Produktivität des entsprechenden Katalysatorsystems nicht befriedigend.

In der EP-OS 0 195 497 wird ein Katalysatorsystem beschrieben, dessen Titankomponente durch Behandeln von $SiO_2$ mit einer organischen Mg-Verbindung, einem Alkohol, einer Lewis-Base und $TiCl_4$ erhalten wird. Auch bei diesem Katalysatorsystem ist die Produktivität gering.

Die bekannten Verfahren lassen somit Wünsche offen, insbesondere was eine gute Produktivität und einen geringen Chlorgehalt in den Polymerisaten bei zugleich hoher Isotaktizität und guter Morphologie betrifft.

Dieser Erfindung ähnliche Verfahren sind in den nachveröffentlichten EP-A-288 845 und EP-A-306 867 beschrieben.

Hier setzt die Aufgabenstellung der vorliegenden Erfindung an, nämlich eine Titankomponente zu schaffen, die gegenüber den Verfahren des Standes der Technik bei guter Produktivität zugleich Polymerisate mit geringem Chlorgehalt, hoher Isotaktizität und guter Morphologie zu liefern vermag.

Es wurde gefunden, daß die gestellte Aufgabe gelöst werden kann mit einem Katalysatorsystem, das eine aus (I) einem speziellen Trägerstoff, der in definierter Weise aus (Ia) einem bestimmten feinteiligen Kieselgel, (Ib) einer bestimmten magnesiumorganischen Verbindung, (Ic) einem bestimmten gasförmigen Chlorierungsmittel sowie (Id) einem speziell ausgewählten Phthalsäureabkömmling erhalten worden ist, sowie (II) einem bestimmten Alkanol und (III) Titantetrachlorid in besonderer Weise hergestellte Titankomponente (1) enthält.

Gegenstand der vorliegenden Erfindung ist dementsprechend ein Verfahren zum Herstellen von Homopolymerisaten des Propens sowie Copolymerisaten des Propens mit untergeordneten Mengen anderer $C_2$- bis $C_{12}$-, insbesondere $C_2$-bis $C_6$-$\alpha$-Monoolefine durch Polymerisation, insbesondere durch Trockenphasenpolymerisation, des bzw. der Monomeren bei Temperaturen von 20 bis 160, insbesondere 50 bis 120 °C und Drücken von 1 bis 100, insbesondere 10 bis 70 bar, mittels eines Ziegler-Natta-Katalysatorsystems aus

(1) einer Titankomponente, die auf einem feinteiligen, formgebenden Kieselgel basiert und Titan, Magnesium, Chlor sowie ein Benzolcarbonsäurederivat enthält,

(2) einer Aluminiumkomponente der Formel

$Al\ R_3$,

worin steht

R für einen nicht mehr als 8, insbesondere nicht mehr als 4 Kohlenstoffatome aufweisenden Alkylrest,

sowie

(3) einer Silankomponente der Formel

$R^1_n\ Si(OR^2)_{4-n}$ ,

worin stehen

$R^1$ für einen nicht mehr als 16, vorzugsweise nicht mehr als 10 Kohlenstoffatome aufweisenden Kohlenwasserstoffrest gesättigt-aliphatischer und/oder aromatischer Natur

$R^2$ für einen nicht mehr als 15, vorzugsweise nicht mehr als 8, und insbesondere nicht mehr als 4 Kohlenstoffatome aufweisenden Alyklrest, und

n für eine Zahl von 0 bis 3, vorzugsweise von 0 bis 2, und insbesondere die Zahl 1 oder 2,

mit den Maßgaben, daß das Atomverhältnis Titan aus der Titankomponente (1) : Aluminium aus der Aluminiumkomponente (2) 1 : 10 bis 1 : 800, insbesondere 1 : 20 bis 1 : 200 und das Molverhältnis Aluminiumkomponente (2) : Silankomponente (3) 1 : 0,01 bis 1 : 0,8, insbesondere 1 : 0,02 bis 1 : 0,5 beträgt.

Das erfindungsgemäße Verfahren ist dadurch gekennzeichnet, daß man als Titankomponente (1) eine solche einsetzt, die erhalten wird, indem man zunächst

(1.1) in einer ersten Stufe (I) einen Trägerstoff herstellt aus (Ia) einem feinteiligen Kieselgel, das das einen Teilchendurchmesser von 1 bis 1000, insbesondere 10 bis 400 $\mu$m, ein Porenvolumen von 0,3 bis 5, insbesondere 1 bis 3,5 $cm^3/g$ sowie eine Oberfläche von 100 bis 1000, insbesondere 200 bis 600 $m^2/g$ besitzt und die Formel $SiO_2$ . a $Al_2O_3$ - worin a steht für eine Zahl im Bereich von 0 bis 2, insbesondere 0 bis 0,5 -hat, (Ib) einer magnesium-organischen Verbindung der Formel $MgR^3R^4$ - worin $R^3$ und $R^4$ stehen für einen $C_2$- bis $C_{10}$-, vorzugsweise $C_4$- bis $C_8$-Alkylrest -, (Ic) einem gasförmigen Chlorierungsmittel der Formel ClZ - worin Z steht für Cl oder H, vorzugsweise H -, sowie (1d) einem Phthalsäureabkömmling der Formel

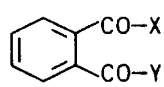

- worin stehen X und Y gemeinsam für Sauerstoff oder X sowie Y für Chlor oder einen $C_1$- bis $C_{10}$-, vorzugsweise $C_2$- bis $C_8$-Alkoxyrest, insbesondere für einen Butoxyrest derart, daß man zuerst

(1.1.1) in einer ersten Unterstufe in einem flüssigen inerten Kohlenwasserstoff, insbesondere einem Alkan, unter ständiger Durchmischung bei Raumtemperatur das feinteilige Kieselgel (Ia) und die magnesiumorganische Verbindung (Ib) zusammenbringt, wobei mengenmäßig eingesetzt werden auf 10 Molteile Silicium des Kieselgels (Ia) 1 bis 10, insbesondere 1,5 bis 4 Molteile der magnesiumorganischen Verbindung (Ib), und das Zusammengebrachte während 0,5 bis 5, insbesondere 1 bis 2 Stunden bei einer Temperatur im Bereich von 20 bis 140, insbesondere 60 bis 90 °C, hält, dann

(1.1.2) in einer zweiten Unterstufe unter ständiger Durchmischung bei einer Temperatur im Bereich von -20 bis +80, insbesondere 0 bis +20 °C, in das aus der ersten Unterstufe Erhaltene (i) das gasförmige Chlorierungsmittel (Ic) einleitet, wobei mengenmäßig eingesetzt werden auf 1 Molteil der magnesiumorganischen Verbindung (Ib) 2 bis 40, insbesondere 10 bis 20

Molteile des Chlorierungsmittels (Ic), sowie (ii) den Phthalsäureabkömmling (Id) einbringt, wobei mengenmäßig eingesetzt werden auf 1 Molteil der magnesiumorganischen Verbindung (Ib) 0,01 bis 1, vorzugsweise 0,1 bis 0,4, und insbesondere 0,20 bis 0,35 Molteile des Phthalsäureabkömmling (Id), das Ganze 0,5 bis 5, insbesondere 0,5 bis 1 Stunden bei einer Temperatur in dem genannten Bereich beläßt und gegebenenfalls das dabei resultierende festphasige Produkt - d.i. den Trägerstoff (I) -unter Abtrennung der flüssigen Phase isoliert, daraufhin

(1.2) in einer zweiten Stufe ein festphasiges Zwischenprodukt herstellt aus (I) dem in der ersten Stufe erhaltenen Trägerstoff, (II) einem $C_1$- bis $C_8$-, vorzugsweise $C_2$- bis $C_6$-Alkanol, insbesondere Ethanol und (III) Titantetrachlorid derart, daß man zuerst

(1.2.1) in einer ersten Unterstufe in einem flüssigen inerten Kohlenwasserstoff, insbesondere einem Alkan, unter ständiger Durchmischung bei Raumtemperatur den Trägerstoff (I) und den Alkanol (II) zusammenbringt, wobei mengenmäßig eingesetzt werden auf 1 Molteil Magnesium des Trägerstoffs (I) 1 bis 5, insbesondere 2,5 bis 3,5 Molteile des Alkanols (II), und das Zusammengebrachte während 0,5 bis 5, insbesondere 1 bis 2 Stunden bei einer Temperatur im Bereich von 20 bis 140, insbesondere 70 bis 90 °C hält, anschließend

(1.2.2.) in einer zweiten Unterstufe unter ständiger Durchmischung bei Raumtemperatur in das aus der ersten Unterstufe resultierende Reaktionsgemisch das Titantetrachlorid (III) einbringt, wobei mengenmäßig eingesetzt werden auf 1 Molteil Magnesium des Trägerstoffs (I) 2 bis 20, insbesondere 4 bis 8 Molteile des Titantetrachlorids (III), das Zusammengebrachte während 0,5 bis 5, insbesondere 1 bis 2 Stunden auf einer Temperatur im Bereich von 10 bis 150, insbesondere 90 bis 120 °C hält und das dabei resultierende festphasige Zwischenprodukt unter Abtrennung der flüssigen Phase isoliert, dann

(1.3) in einer dritten Stufe das aus der zweiten Stufe erhaltene festphasige Zwischenprodukt bei einer Temperatur im Bereich von 100 bis 150, insbesondere 115 bis 135 °C, während einer Zeitspanne von 0,2 bis 8, insbesondere 1 bis 6 Stunden einer ein- oder mehrstufigen oder - vorzugsweise - kontinuierlichen Extraktion mit Titantetrachlorid oder einer Mischung aus Titantetrachlorid und Ethylbenzol, deren Gewichtsanteil an Titantetrachlorid mindestens 2, vorzugsweise mindestens 5, insbesondere mindestens 10 Gew.-%, beträgt, unterzieht, wobei mengenmäßig eingesetzt werden auf 10 Gewichtsteile des aus der zweiten Stufe erhaltenen festphasigen Zwischenprodukts insgesamt 10 bis 1000, vorzugsweise 20 bis 800, insbesondere 50 bis 300 Gewichtsteile des Extraktionsmittels, und schließlich

(1.4) in einer vierten Stufe das in der dritten Stufe entstandene festphasige Produkt ein- oder mehrmals mit einem flüssigen inerten Kohlenwasserstoff, insbesondere einem Alkan, wäscht - und derart die Titankomponente (1) gewinnt.

Wie sich gezeigt hat, läßt sich das erfindungsgemäße Verfahren mit besonders gutem Erfolg durchführen, wenn ein Katalysatorsystem eingesetzt wird, dessen Silankomponente (3) eine solche ist, in deren Formel

$$R^1_n\,Si(OR^2)_{4-n}$$

stehen

- $R^1$ für einen Phenyl-, einen $C_1$- bis $C_4$-Alkylphenyl- oder einen $C_1$- bis $C_5$-Alkylrest,
- $R^2$ für einen nicht mehr als 4 Kohlenstoffatome aufweisenden Alkylrest, vor allem einen Methyl- oder Ethylrest, und
- n für die Zahl 1 oder 2

Zu dem erfindungsgemäßen Verfahren ist im einzelnen das folgende zu bemerken:

Das Polymerisationsverfahren als solches kann - unter Beachtung der kennzeichnenden Besonderheit - in praktisch allen einschlägig üblichen technologischen Ausgestaltungen durchgeführt werden, etwa als diskontinuierliches, taktweises oder - insbesondere - kontinuierliches Verfahren, sei es z.B. als Suspensionspolymerisationsverfahren oder - insbesondere - Trockenphasenpolymerisationsverfahren. Die erwähnten technologischen Ausgestaltungen - mit anderen Worten: die technologischen Varianten der Polymerisation von $\alpha$-Monoolefinen nach Ziegler-Natta - sind aus der Literatur und Praxis wohlbekannt, so daß sich nähere Ausführungen zu ihnen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z.B. mittels Reglern, wie insbesondere Wasserstoff.

Was die stoffliche Seite des neuen Katalysatorsystems betrifft, ist im einzelnen das folgende zu sagen:

(1) Das zur Herstellung der Titankomponente einzusetzende kleinteilige Kieselgel (Ia) wird im allgemeinen ein Alumosilikat oder - insbesondere - ein Siliciumdioxid sein; wichtig ist, daß es die geforderten Eigenschaften besitzt. Wie sich gezeigt hat, sind die der gegebenen Spezifikation entsprechenden im Handel erhältlichen, für Trägerstoffe einschlägig üblichen Kieselgele gut geeignet.

Die gleichfalls einzusetzende magnesiumorganische Verbindung (Ib) kann z.B. Dibutylmagnesium, Dihexylmagnesium und insbesondere Butyloctylmagnesium sein.

Das ferner einzusetzende gasförmige Chlorierungsmittel (Ic) sollte möglichst trocken und rein sein; es besteht aus Chlor oder insbesondere Chlorwasserstoff.

Der einzusetzende, oben näher definierte Phthalsäureabkömmling (Id) kann ein handelsüblicher sein; er sollte vorteilhafterweise einen hohen Reinheitsgrad aufweisen. Wie sich gezeigt hat, ist für den erfindungsgemäßen Zweck ganz besonders gut geeignet der Phthalsäuredibutylester; aber auch andere Pthalsäuredialkylester sowie Phthalsäureanhydrid und Phthalsäuredichlorid sind geeignet.

Der als Hilfsstoff dienende flüssige inerte Kohlenwasserstoff kann ein Kohlenwasserstoff der Art sein, die üblicherweise mit Titankomponenten für Katalysatorsysteme des Ziegler-Natta-Typs ohne Schaden für das Katalysatorsystem bzw. dessen Titankomponente zusammengebracht wird. Als Beispiele für geeignete Kohlenwasserstoffe seien genannt: Pentane, Hexane, Heptane, Benzine und Cyclohexan.

Die zur Herstellung der Titankomponente (1) einzusetzenden Alkanole (II) können handelsübliche sein; sie sollten vorteilhafterweise relativ hohe Reinheitsgrade aufweisen. Gut geeignet sind z.B. Ethanol, n-Propyl-, i-Propyl-, n-Butyl-, i-Butyl- oder tert.-Butylalkohol; besonders geeignet ist Ethanol.

Das zur Herstellung der Titankomponente (1) ebenfalls einzusetzende Titantetrachlorid (III) sollte ein bei Ziegler-Natta-Katalysatorsystemen übliches sein; das gegebenenfalls im Gemisch mit dem Titantetrachlorid einzusetzende Ethylbenzol sollte möglichst rein und trocken sein.

Der zur Herstellung der Titankomponente (1) in Stufe (1.4) einzusetzende Kohlenwasserstoff kann ebenfalls ein üblicher sein; er sollte vorteilhafterweise einen relativ hohen Reinheitsgrad aufweisen.

Die Herstellung der Titankomponente (1) ist einfach und für den Fachmann ohne Erläuterungen möglich. Zu den Stufen (1.1), (1.2) und (1.3) ist lediglich zu erwähnen, daß gegebenenfalls die Isolierung des jeweils resultierenden Feststoffs zweckmäßigerweise durch Absaugen erfolgt.

(2) Als Aluminiumkomponenten (2) mit der angegebenen Formel kommen die einschlägig üblichen, dieser Formel gehorchenden in Betracht; sie sind aus Literatur und Praxis so wohlbekannt, daß auf sie nicht näher eingegangen zu werden braucht. Als herausragender Vertreter sei beispielsweise genannt Triethylaluminium.

(3) Die das Katalysatorsystem vervollständigende Silankomponente (3) ist insbesondere ein Trialkoxyphenylsilan, ein Trialkoxy(alkyl)-phenylsilan, ein Dialkoxydiphenylsilan oder ein Dialkoxydi(alkyl)phenylsilan der angegebenen Formel. Als herausragender Vertreter ist zu nennen das Triethoxytoluylsilan; ferner seien beispielsweise genannt Triethoxyethyl-phenylsilan, Dimethoxyditoluylsilan sowie Diethoxyditoluylsilan. Aber auch Dialkoxydialkylsilane und Trialkoxyalkylsilane sind gut geeignet.

Das erfindungsgemäße Verfahren erlaubt es, Homo- und Copolymerisate, z.B. des binären oder ternären Typs, - auch Blockcopolymerisate - des Propens mit untergeordneten Mengen anderer $C_2$- bis $C_{12}$-$\alpha$-monoolefine in vorteilhafter Weise herzustellen, wobei besonders geeignete zu polymerisierende $\alpha$-Monoolefine als Comonomere Ethen, Buten-1, 4-Methylpenten-1 und Hexen-1 sind; es eignen sich aber auch z.B. n-Okten-1, n-Decen-1 sowie n-Dodecen-1.

Beispiel 1

Herstellen der Titankomponente (1)

Es wird so verfahren, daß man zunächst

(1.1) in einer ersten Stufe (I) einen Trägerstoff herstellt aus (Ia) einem feinteiligen Kieselgel, das einen Teilchendurchmesser von 20 bis 45 $\mu$m, ein Porenvolumen von 1,75 $cm^3/g$ sowie eine Oberfläche von 320 $m^2/g$ besitzt und die Formel $SiO_2$ hat, (Ib) Butyl-octylmagnesium, (Ic) Chlorwasserstoff sowie (Id) Phthalsäure-di-n-butylester, derart, daß man zuerst

(1.1.1) in einer ersten Unterstufe in n-Heptan, unter ständiger Durchmischung mittels Rühren bei Raumtemperatur das feinteilige Kieselgel (Ia) und die magnesiumorganische Verbindung (Ib) zusammenbringt, wobei mengenmäßig eingesetzt werden auf 10 Molteile Silicium des Kieselgels (Ia) 2,5 Molteile der magnesiumorganischen Verbindung (Ib), und das Zuammengebrachte während 1,5 Stunden bei einer Temperatur im Bereich von 90 °C hält, dann

(1.1.2) in einer zweiten Unterstufe unter ständiger Durchmischung mittels Rühren bei einer Temperatur im Bereich von 10 °C in das aus der ersten Unterstufe Erhaltene (i) das gasförmige Chlorierungsmittel (Ic) einleitet, wobei mengenmäßig eingesetzt werden auf 1 Molteil der magnesiumorganischen Verbindung (Ib) 10 Molteile des Chlorierungsmittels (Ic) sowie (ii) fünf Minuten nach Beginn der Chlorierung den Phthalsäureabkömmling (Id) einbringt, wobei mengenmäßig eingesetzt werden auf 1 Molteil der magnesiumorganischen Verbindung (Ib) 0,3 Molteile des Phthalsäureabkömmlings (Id), das Ganze

1,5 Stunden bei einer Temperatur in dem genannten Bereich beläßt, und das dabei resultierende festphasige Produkt - d.i. den Trägerstoff (I) - in der flüssigen Phase beläßt, daraufhin

(1.2) in einer zweiten Stufe ein festphasiges Zwischenprodukt herstellt aus (I) dem in der ersten Stufe erhaltenen Trägerstoff, (II) Ethanol und (III) Titantetrachlorid, derart, daß man zuerst

(1.2.1) in einer ersten Unterstufe in n-Heptan unter ständiger Durchmischung mittels Rühren bei Raumtemperatur den Trägerstoff (I) und das Ethanol (II) zusammenbringt - wobei mengenmäßig eingesetzt werden auf 1 Molteil Magnesium des Trägerstoffs (I) 3 Molteile des Ethanols (II) - und das Zusammengebrachte während 1,5 Stunden bei einer Temperatur im Bereich von 80 °C hält, anschließend

(1.2.2) in einer zweiten Unterstufe unter ständiger Durchmischung mittels Rühren bei Raumtemperatur in das aus der ersten Unterstufe resultierende Reaktionsgemisch das Titantetrachlorid (III) einbringt - wobei mengenmäßig eingesetzt werden auf 1 Molteil Magnesium des Trägerstoffs (I) 7 Molteile des Titantetrachlorids (III) -, das Zusammengebrachte unter Rühren während 2 Stunden auf einer Temperatur im Bereich von 100 °C hält, und das dabei resultierende festphasige Zwischenprodukt unter Abtrennung der flüssigen Phase mittels Absaugen isoliert, dann

(1.3) in einer dritten Stufe das aus der zweiten Stufe erhaltene festphasige Zwischenprodukt bei einer Temperatur von 125 °C während einer Zeitspanne von 4 Stunden einer kontinuierlichen Extraktion mit einer Mischung aus Titantetrachlorid und Ethylbenzol, deren Gewichtsanteil an Titantetrachlorid 15 Gew.% beträgt, unterzieht - wobei mengenmäßig eingesetzt werden auf 10 Gew.-Teile des aus der zweiten Stufe erhaltenen festphasigen Zwischenprodukts 100 Gew.-Teile der Titantetrachlorid-Ethylbenzol-Mischung - hierauf das entstandene festphasige Zwischenprodukt mittels Filtration isoliert und schließlich

(1.4) in einer vierten Stufe das in der dritten Stufe gewonnene festphasige Produkt dreimal mit n-Heptan wäscht - und derart die Titankomponente (1) gewinnt; sie enthält 4,4 Gew.-% Titan, 6,5 Gew.-% Magnesium und 27,5 Gew.-% Chlor.

Polymerisation

Ein Stahlautoklav von 10-l-Volumen, ausgerüstet mit einem Rührer, wird mit 50 g Polypropenpulver, 10 mMol Aluminiumtriethyl (in Form einer 1-molaren Lösung in n-Heptan) als Aluminiumkomponente (2), 1 mMol Triethoxyphenylsilan (in Form einer 1-molaren Lösung in n-Heptan) als Silankomponente (3), 5 Normalliter Wasserstoff und schließlich 120 mg (≙ 0,11 mMol Titan), der oben beschriebenen Titankomponente (1) bei 30 °C beschickt. Die Reaktortemperatur wird binnen 10 Minuten auf 70 °C, der Reaktordruck mittels Aufpressen von gasförmigem Propen in dieser Zeit auf 28 bar gebracht.

Die eigentliche Polymerisation wird unter ständigem Rühren bei 70 °C und 28 bar während 2 Stunden durchgeführt, hierbei verbrauchtes Monomer wird kontinuierlich durch frisches ersetzt.

Die Produktivität der Katalysatorkomponente (1), der heptanlösliche Anteil (als Maß für die Isotaktizität) und die Kornverteilung des dabei erhaltenen Polymerisats sind in der nachstehenden Tabelle zusammengestellt.

Beispiel 2

Es wird verfahren wie in Beispiel 1, mit der einzigen Ausnahme, daß als Silankomponente (3) die gleiche Molmenge Dimethoxyditoluylsilan eingesetzt wird.

Zum so erhaltenen Polymerisationsergebnis siehe ebenfalls die nachstehende Tabelle.

Vergleichsversuch

Herstellen der Titankomponente

Es wird verfahren wie im Beispiel 1 der EP-OS 0 195 497.

Man erhält eine Titankomponente, die 3,6 Gew.-% Titan, 4,4 Gew.-% Magnesium und 16 Gew.-% Chlor enthält.

Polymerisation

Sie erfolgt wie im Beispiel 1, jedoch nicht mit der dort beschriebenen Titankomponente, sondern mit der gleichen Molmenge der vorstehend bezeichneten Titankomponente.

Zum dabei erreichten Polymerisationsergebnis siehe wiederum die nachstehende Tabelle.

| | Produktivität (g PP/g Kat.) | Heptanlösliche Anteile (Gew.-%) | Kornverteilung (mm) <0,25 | 0,25-0,5 | 0,5-1 | 1-2 | >2 | Chlorgehalt im Produkt (ppm) |
|---|---|---|---|---|---|---|---|---|
| Beispiel 1 | 13 400 | 2,3 | 1,3 | 4,4 | 64,6 | 29,5 | 0,1 | 20,5 |
| Beispiel 2 | 15 600 | 1,6 | 1,1 | 3,8 | 50,3 | 44,5 | 0,3 | 17,6 |
| Vergleichsversuch | 3 500 | 4,0 | 3,0 | 29,8 | 54 | 12,2 | 1,0 | 46 |

Wie aus der Tabelle zu ersehen ist, weist die Katalysatorkomponente aus dem Vergleichsversuch eine wesentlich geringere Produktivität und Stereospezifität auf als die Katalysatorkomponenten aus den erfindungsgemäßen Beispielen. Darüber hinaus ist der Chlorgehalt im Polymerisat wesentlich höher als in den erfindungsgemäßen Fällen.

**Patentansprüche**

1. Verfahren zum Herstellen von Homopolymerisaten des Propens sowie Copolymerisaten des Propens mit untergeordneten Mengen anderer $C_2$- bis $C_{12}$-$\alpha$-Monoolefine durch Polymerisation des bzw. der Monomeren bei Temperaturen von 20 bis 160 °C und Drücken von 1 bis 100 bar mittels eines Ziegler-Natta-Katalysatorsystems aus

   (1) einer Titankomponente, die auf einem feinteiligen, formgebenden Kieselgel basiert und Titan, Magnesium, Chlor sowie ein Benzolcarbonsäurederivat enthält,

   (2) einer Aluminiumkomponente der Formel

   $Al\,R_3$,

   worin steht

   R für einen nicht mehr als 8 Kohlenstoffatome aufweisenden Alkylrest,

   sowie

   (3) einer Silankomponente der Formel

   $R^1_n\,Si(OR^2)_{4-n}$ ,

   worin stehen

   $R^1$ für einen nicht mehr als 16 Kohlenstoffatome aufweisenden Kohlenwasserstoffrest gesättigt-aliphatischer und/oder aromatischer Natur,

   $R^2$ für einen nicht mehr als 15 Kohlenstoffatome aufweisenden Alkylrest, und

   n für eine Zahl von 0 bis 3,

   mit den Maßgaben, daß das Atomverhältnis Titan aus der Titankomponente (1) : Aluminium aus der Aluminiumkomponente (2) 1 : 10 bis 1 : 800 und das Molverhältnis Aluminiumkomponente (2) : Silankomponente (3) 1 : 0,01 bis 1 : 0,8 beträgt, dadurch gekennzeichnet,

   daß man als Titankomponente (1) eine solche einsetzt, die erhalten wird, indem man zunächst

   (1.1) in einer ersten Stufe (I) einen Trägerstoff herstellt aus (Ia) einem feinteiligen Kieselgel, das einen Teilchendurchmesser von 1 bis 1000 $\mu$m, ein Porenvolumen von 0,3 bis 5 $cm^3/g$ sowie eine Oberfläche von 100 bis 1000 $m^2/g$ besitzt und die Formel $SiO_2 \cdot a\,Al_2O_3$ - worin a steht für eine Zahl im Bereich von 0 bis 2 - hat, (Ib) einer magnesiumorganischen Verbindung der Formel $MgR^3R^4$ - worin $R^3$ und $R^4$ stehen für einen $C_2$- bis $C_{10}$-Alkylrest -, (Ic) einem gasförmigen Chlorierungsmittel der Formel ClZ -

worin Z steht für Cl oder H - sowie (Id) einem Phthalsäureabkömmling der Formel

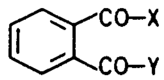

- worin stehen X und Y gemeinsam für Sauerstoff oder X sowie Y für Chlor oder einen $C_1$- bis $C_{10}$-Alkoxyrest -, derart, daß man zuerst

(1.1.1) in einer ersten Unterstufe in einem flüssigen inerten Kohlenwasserstoff unter ständiger Durchmischung bei Raumtemperatur das feinteilige Kieselgel (Ia) und die magnesiumorganische Verbindung (Ib) zusammenbringt, wobei mengenmäßig eingesetzt werden auf 10 Molteile Silicium des Kieselgels (Ia) 1 bis 10 Molteile der magnesiumorganischen Verbindung (Ib), und das Zusammengebrachte während 0,5 bis 5 Stunden bei einer Temperatur im Bereich von 20 bis 140 °C hält, dann

(1.1.2) in einer zweiten Unterstufe unter ständiger Durchmischung bei einer Temperatur im Bereich von -20 bis +80 °C in das aus der ersten Unterstufe Erhaltene (i) das gasförmige Chlorierungsmittel (Ic) einleitet, wobei mengenmäßig eingesetzt werden auf 1 Molteil der magnesiumorganischen Verbindung (Ib) 2 bis 40 Molteile des Chlorierungsmittels (Ic), sowie (ii) den Phthalsäureabkömmling (Id) einbringt, wobei mengenmäßig eingesetzt werden auf 1 Molteil der magnesiumorganischen Verbindung (Ib) 0,01 bis 1 Molteile des Phthalsäureabkömmlings (Id),das Ganze 0,5 bis 5 Stunden bei einer Temperatur in dem genannten Bereich beläßt und gegebenenfalls das dabei resultierende festphasige Produkt - d.i. den Trägerstoff (I) - unter Abtrennung der flüssigen Phase isoliert, daraufhin

(1.2) in einer zweiten Stufe ein festphasiges Zwischenprodukt herstellt aus (I), dem in der ersten Stufe erhaltenen Trägerstoff, (II) einem $C_1$- bis $C_8$-Alkanol und (III) Titantetrachlorid derart, daß man zuerst

(1.2.1) in einer ersten Unterstufe in einem flüssigen inerten Kohlenwasserstoff unter ständiger Durchmischung bei Raumtemperatur den Trägerstoff (I) und den Alkanol (II) zusammenbringt, wobei mengenmäßig eingesetzt werden auf 1 Molteil Magnesium des Trägerstoffs (I) 1 bis 5 Molteile des Alkanols (II) und das Zusammengebrachte während 0,5 bis 5 Stunden bei einer Temperatur im Bereich von 20 bis 140 °C hält, anschließend

(1.2.2) in einer zweiten Unterstufe unter ständiger Durchmischung bei Raumtemperatur in das aus der ersten Unterstufe resultierende Reaktionsgemisch das Titantetrachlorid (III) einbringt, wobei mengenmäßig eingesetzt werden auf 1 Molteil Magnesium des Trägerstoffs (I) 2 bis 20 Molteile des Titantetrachlorids (III), das Zusammengebrachte während 0,5 bis 5 Stunden auf einer Temperatur im Bereich von 10 bis 150 °C hält und das dabei resultierende festphasige Zwischenprodukt unter Abtrennung der flüssigen Phase isoliert, dann

(1.3) in einer dritten Stufe das aus der zweiten Stufe erhaltene festphasige Zwischenprodukt bei einer Temperatur im Bereich von 100 bis 150 °C während einer Zeitspanne von 0,2 bis 8 Stunden einer ein- oder mehrstufigen oder kontinuierlichen Extraktion mit Titantetrachlorid oder einer Mischung aus Titantetrachlorid und Ethylbenzol, deren Gewichtsanteil an Titantetrachlorid mindestens 2 % beträgt, unterzieht, wobei mengenmäßig eingesetzt werden auf 10 Gewichtsteile des aus der zweiten Stufe erhaltenen festphasigen Zwischenprodukts insgesamt 10 bis 1000 Gew.-Teile des Extraktionsmittels, und schließlich

(1.4) in einer vierten Stufe das in der dritten Stufe entstandene festphasige Produkt ein- oder mehrmals mit einem flüssigen inerten Kohlenwasserstoff wäscht - und derart die Titankomponente (1) gewinnt.

**2.** Verfahren gemäß Patentanspruch 1, dadurch gekennzeichnet, daß ein Katalysatorsystem eingesetzt wird, dessen Silankomponente (3) eine solche ist, in deren Formel

$$R^1_n\,Si(OR^2)_{4-n}$$

stehen

| | |
|---|---|
| $R^1$ | für einen Phenyl-, einen $C_1$- bis $C_4$-Alkylphenyl- oder einen $C_1$- bis $C_5$-Alkylrest, |
| $R^2$ | für einen nicht mehr als 4 Kohlenstoffatome aufweisenden Alkylrest, und |
| n | für die Zahl 1 oder 2. |

## Claims

**1.** A process for preparing a homopolymer of propene or a copolymer of propene with a minor amount of another $C_2$-$C_{12}$-$\alpha$-monoolefin by polymerization of the monomer(s) at from 20 to 160 °C under from 1 to 100 bar by

means of a Ziegler-Natta catalyst system composed of

(1) a titanium component based on a finely divided shape-conferring silica gel and containing titanium, magnesium, chlorine and a benzenecarboxylic acid derivative,

(2) an aluminum component of the formula

$AlR_3$

where

R is alkyl of not more than 8 carbon atoms, and

(3) a silane component of the formula

$R^1_n\ Si(OR^2)_{4-n}$

where

$R^1$ is saturated aliphatic or aromatic hydrocarbyl of not more than 16 carbon atoms,

$R^2$ is alkyl of not more than 15 carbon atoms, and n is from 0 to 3,

with the provisos that the atomic ratio of titanium of titanium component (1) : aluminum of aluminum component (2) is from 1 : 10 to 1 : 800 and the molar ratio of aluminum component (2) : silane component (3) is from 1 : 0.01 to 1 : 0.8, which comprises using as the titanium component (1) a titanium component obtained by first of all

(1.1) preparing in a first stage (I) a carrier material from (Ia) a finely divided silica gel having a particle diameter of from 1 to 1,000 µm, a pore volume of from 0.3 to 5 $cm^3/g$, a surface area of from 100 to 1,000 $m^2/g$, and the formula $SiO_2.aAl_2O_3$, where a is from 0 to 2, (Ib) an organomagnesium compound of the formula $MgR^3R^4$, where $R^3$ and $R^4$ are each $C_2$-$C_{10}$-alkyl, (Ic) a gaseous chlorinating agent of the formula ClZ, where Z is Cl or H, and (Id) a phthalic acid derivative of the formula

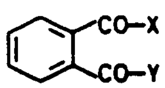

where X and Y together are oxygen or singly chlorine or $C_1$-$C_{10}$-alkoxy, by first

(1.1.1) bringing together in a first substage in a liquid inert hydrocarbon with constant mixing at room temperature the finely divided silica gel (Ia) and the organomagnesium compound (Ib) by using per 10 molar parts of silicon of silica gel (Ia) from 1 to 10 molar parts of the organomagnesium compound (Ib), and keeping the mixture at from 20 to 140 °C for from 0.5 to 5 hours, then

(1.1.2) introducing into the product obtained from the first substage in a second substage with constant mixing at from -20 to +80 °C, (i) the gaseous chlorinating agent (Ic) using from 2 to 40 molar parts of chlorinating agent (Ic) per molar part of organomagnesium compound (Ib), and (ii) the phthalic acid derivative (Id) using per molar part of organomagnesium compound (Ib) from 0.01 to 1 molar parts of phthalic acid derivative (Id) leaving the whole mixture at a temperature within the stated range for from 0.5 to 5 hours and, where appropriate, isolating the resulting solid-phase product, i.e. the carrier material (I), by removing the liquid phase, and then

(1.2) preparing in a second stage a solid-phase intermediate from (I) the carrier material obtained in the first stage, (II) a $C_1$-$C_8$-alkanol and (III) titanium tetrachloride by first

(1.2.1) bringing together in a first substage in a liquid inert hydrocarbon with constant mixing at room temperature the carrier material (I) and the alkanol (II) using from 1 to 5 molar parts of alkanol (II) per molar part of magnesium of carrier material (I), and keeping the mixture at from 20 to 140 °C for from 0.5 to 5 hours, then

(1.2.2) in a second substage introducing the titanium tetrachloride (III) with constant mixing at room temperature into the reaction mixture resulting from the first substage using from 2 to 20 molar parts of titanium tetrachloride (III) per molar part of magnesium of carrier material (I), keeping the mixture at from 10 to 150 °C for from 0.5 to 5 hours and isolating the resulting solid-phase intermediate by removing the liquid phase, then

(1.3) in a third stage subjecting the solid-phase intermediate obtained from the second stage at from 100 to 150 °C for from 0.2 to 8 hours to a single- or multi-stage or continuous extraction with titanium tetrachloride or a mixture of titanium tetrachloride and an ethylbenzene whose titanium tetrachloride content is not less than 2 %, using for every 10 parts by weight of the solid-phase intermediate obtained from the second stage a total of from 10 to 1,000 parts by weight of extractant, and finally

(1.4) in a fourth stage washing the solid-phase product formed in the third stage one or more times with a liquid inert hydrocarbon and so obtaining titanium component (1).

2. A process as claimed in claim 1, wherein the catalyst system used has a silane component (3) of the formula

$R^1_n\ Si(OR^2)_{4-n}$

where

- $R^1$ is phenyl, $C_1$-$C_4$-alkylphenyl or $C_1$-$C_5$-alkyl,
- $R^2$ is alkyl of not more than 4 carbon atoms and
- n is 1 or 2.

## Revendications

1. Procédé de préparation d'homopolymères du propène, comme aussi de copolymères du propène avec des proportions mineures d'autres $\alpha$-monooléfines en $C_2$ à $C_{12}$, par la polymérisation du ou des monomères à des températures de 20 à 160°C et sous des pressions de 1 à 100 bars, à l'aide d'un système catalytique de Ziegler-Natta, constitué de

(1) un composant de titane qui est à base d'un gel de silice donnant la forme, finement divisé et qui contient du titane, du magnésium, du chlore, comme aussi un dérivé de l'acide benzènecarboxylique,

(2) un composant d'aluminium de la formule

$Al\ R_3$,

dans laquelle

R représente un radical alkyle ne comportant pas plus de 8 atomes de carbone, comme aussi

(3) un composant silanique de la formule

$R^1_n\ Si(OR^2)_{4-n}$ ,

dans laquelle

$R^1$ représente un radical hydrocarboné ne présentant pas plus de 16 atomes de carbone, de nature aromatique et/ou aliphatique saturée,

$R^2$ représente un radical alkyle ne comportant pas plus de 15 atomes de carbone et

n représente un nombre dont la valeur varie de 0 à 3,

avec les conditions que le rapport atomique du titane du composant de titane (1) à l'aluminium du composant d'aluminium (2) varie de 1:10 à 1:800 et que le rapport molaire du composant d'aluminium (2) au composant silanique (3) varie de 1:0,01 à 1:0,8, caractérisé en ce qu'à titre de composant de titane (1), on met en oeuvre un produit de ce genre, que l'on obtient pour autant que, d'abord,

(1.1) au cours d'une première étape (I), on prépare un support à partir de (Ia) un gel de silice finement divisé, qui possède un diamètre des particules de 1 à 1000 µm, un volume des pores de 0,3 à 5 $cm^3/g$, comme aussi une surface de 100 à 100 $m^2/g$ et qui répond à la formule $SiO_2.a\ Al_2O_3$ - où a représente un nombre dont la valeur varie de 0 à 2 - , (Ib) un composé organomagnésien de la formule $MgR^3R^4$ - où $R^3$ et $R^4$ représentent chacun un radical alkyle en $C_2$ à $C_{10}$ - , (Ic) un agent de chloration gazeux de la formule ClZ - où Z représente un atome de chlore ou un atome d'hydrogène - , comme aussi (Id) un dérivé de l'acide phtalique de la formule

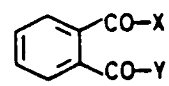

- où X et Y représentent conjointement un atome d'oxygène, ou bien X comme aussi Y représentent chacun un atome de chlore ou un radical alcoxy en $C_1$ à $C_{10}$ - , en une manière telle que, en premier lieu,

(1.1.1) au cours d'une première subétape, on rassemble le gel de silice finement divisé (Ia) et le composé organomagnésien (Ib) à la température ambiante, sous mélange intime constant, dans un hydrocarbure inerte et liquide, où l'on met quantitativement en oeuvre, sur base de 10 parties molaires de silicium du gel de silice (Ia), 1 à 10 parties molaires du composé organomagnésien (Ib) et on maintienne l'ensemble à une température qui se situe dans la plage de 20 à 140°C pendant 0,5 à 5 heures, puis

(1.1.2) au cours d'une seconde subétape, (i) on conduise le mélange de chloration gazeux (Ic) en mettant en oeuvre quantitativement, par rapport à 1 partie molaire du composé organomagnésien (Ib), 2 à 40 parties molaires de l'agent de chloration (Ic) et (ii) on introduise le dérivé d'acide phtalique (Id) en utilisant quantitativement, pour 1 partie molaire du composé organomagnésien (Ib), 0,01 à 1 partie molaire du dérivé d'acide phtalique (Id), dans le mélange obtenu au cours de la première subétape, à une température qui se situe dans la plage de -20 à +80°C et sous mélange intime constant, on laisse reposer le tout à une

température qui se situe dans la plage précitée pendant une période qui fluctue de 0,5 à 5 heures et on isole éventuellement le produit en phase solide ainsi obtenu - c'est-à-dire le support (I) - par séparation de la phase liquide, puis

(1.2) au cours d'une seconde étape, on prépare un produit intermédiaire à phase solide à partir de (I) le support obtenu au cours de la première étape, (II) un alcanol en $C_1$ à $C_8$ et (III) du tétrachlorure de titane,

(1.2.1) en une manière telle que, d'abord, au cours d'une première subétape, on rassemble ou réunisse le support (I) et l'alcool (II) à la température ambiante dans un hydrocarbure inerte et liquide, sous mélange intime constant, où l'on utilise quantitativement, par rapport à 1 partie molaire de magnésium du support (I), 1 à 5 parties molaires de l'alcanol (II) et on maintienne l'ensemble à une température qui se situe dans la plage de 20 à 140 °C et pendant une période qui fluctue de 0,5 à 5 heures, puis

(1.2.2) au cours d'une seconde subétape, on introduise le tétrachlorure de titane (II) en utilisant quantitativement, par rapport à 1 partie molaire de magnésium du support (II), 2 à 20 parties molaires du tétrachlorure de titane (III) dans le mélange réactionnel résultant de la première subétape, à la température ambiante et sous mélange intime constant, on maintienne l'ensemble à une température qui se situe dans la plage de 10 à 150 °C pendant une période qui varie de 0,5 à 5 heures et on isole le produit intermédiaire en phase solide ainsi obtenu par séparation de la phase liquide, ensuite

(1.3) au cours d'une troisième étape, on soumette le produit intermédiaire en phase solide obtenu au cours de la seconde étape, à une extraction mono- ou multiétagée, ou continue, avec du tétrachlorure de titane, ou un mélange de tétrachlorure de titane et d'éthylbenzène, dont la fraction pondérale en tétrachlorure de titane atteint au moins 2% en poids, à une température qui se situe dans la plage de 100 à 150 °C et pendant une période qui s'étend sur 0,2 à 8 heures, où l'on utilise quantitativement, par rapport à 10 parties en poids du produit intermédiaire en phase solide obtenu au cours de la seconde étape, de 10 à 1000 parties en poids de l'agent d'extraction et, finalement,

(1.4) au cours d'une quatrième étape, on lave une ou plusieurs fois le produit en phase solide obtenu au cours de la troisième étape avec un hydrocarbure liquide et inerte - en obtenant ainsi le composant de titane (1).

**2.** Procédé suivant la revendication 1, caractérisé en ce que l'on utilise un système catalytique dont le composant silanique (3) en est un dans la formule

$R^1_n\, Si(OR^2)_{4-n}$

duquel

- $R^1$ représente un radical phényle, alkyl-($C_1$-$C_4$)phényle ou alkyle en $C_1$-$C_5$,
- $R^2$ représente un radical alkyle qui ne comporte pas plus de 4 atomes de carbone et
- n est égal à 1 ou à 2.